# EUROPEAN PATENT APPLICATION

(11) **EP 4 667 923 A1**
(43) Date of publication of application: **24.12.2025**
(21) Application number: 25183468.5
(22) Date of filing: 17.06.2025
(51) Int. Cl.: G01N 25/72

(54) **INSPECTION SYSTEM FOR DETECTING SURFACE CRACKS VIA EDDY CURRENT THERMOGRAPHY**

(30) Priority: 17.06.2024 US 202418745234
(71) Applicant: RTX Corporation, Farmington, CT 06032 (US)
(72) Inventor: OUYANG, Zhong, Glastonbury, 06033 (US); HARMON, Kim Backus, Bolton, 06043 (US); KIREJCZYK, Maria, Murrells Inlet, 29576 (US)
(74) Representative: Dehns

(57) **Abstract**

An inspection system (400) detects defects within a component (403) using eddy current thermography. An infrared camera (402) detects heat (407) from a defect (406) within the component generated by the eddy current interfering with the defect (406). The eddy current is generated in the component by a magnetic field applied to the component by an inductor assembly (408). The inductor assembly (408) includes a magnetic core (602) having magnetic core material and two arms (606A, 606B), each arm including a coil (608, 610) to generate the magnetic field. The inductor assembly (408) is configured to apply the magnetic field at an angle offset from a horizontal axis of the magnetic core such that the eddy current flows at an angle within the component relative to the offset angle. Further, the magnetic core material can be shaped to apply the magnetic field at the offset angle or to accommodate complex component shapes.

## Description

### FIELD OF THE INVENTION

The subject matter disclosed herein relates to systems and devices for increasing the detection of surface cracks in components using eddy current thermography and, in particular, to such systems and devices using a modified magnetic field direction.

### BACKGROUND OF THE INVENTION

Stress corrosion cracks within components used in aircraft engines or within blades may be difficult to detect using conventional fluorescent penetrant testing (FPI), visual inspection, and the like. For FPI, a detection process would remove the coating on the blade, which adds to process time and labor. For those components having vent holes and a complex shape, it may be difficult to detect cracks using FPI.

It may be appreciated that a need to improve a component inspection process to detect cracks without the need for FPI along with increasing the detection of the cracks using existing thermography systems.

### SUMMARY OF THE INVENTION

The present invention is directed, according to a first aspect, to an inspection system or method for detecting a defect in a component using eddy current thermography. The inspection system or method includes an infrared camera to detect heat generating using an eddy current in the component. The heat can be caused by the defect in the component. The inspection system also includes a computer system to generate an image scan from at least one thermal signature of the heat captured by the infrared camera. The inspection system also includes an inductor assembly to apply a magnetic field to the component to generate the eddy current. The inductor assembly includes a C-shaped magnetic core having a first arm and a second arm. The inductor assembly also includes a first coil on the first arm and a second coil on the second arm to generate the magnetic field. The inductor assembly also includes a gap to accommodate the component between the first arm and the second arm. The first and second arms and the first and second coils are positioned, or positionable, to offset the magnetic field within the component at an angle from a horizontal axis of the magnetic core. This allows the eddy current in the component to be disturbed by the defect.

In an embodiment of the above, the first and second arms of the inductor assembly are positioned at the angle to offset the magnetic field applied by the inspection system.

In an embodiment of any of the above, the first and second arms of the inductor assembly are not aligned in a horizontal direction such that the first and second coils are offset to apply the magnetic field at the angle.

In an embodiment of any of the above, the first and second coils are shaped to generate the magnetic field at the angle.

In an embodiment of any of the above, the first and second arms include magnetic core material shaped to apply the magnetic field to the component at the angle.

In an embodiment of any of the above, the first and second arms include magnetic core material having a first stepped cut portion and a second stepped cut portion, respectively, and optionally the first stepped cut portion is shaped to fit at least one first protrusion of the component and the second stepped cut portion is shaped to fit at least one second protrusion of the component.

In an embodiment of any of the above, the first and second arms include magnetic core material having a first concave portion and a second concave portion, respectively, and optionally the component fits within the gap formed by the first concave portion and the second concave portion.

According to another aspect, the present invention is directed to a C-shaped inductor assembly for use in an inspection system. The inductor assembly includes a magnetic core having magnetic core material. The magnetic core is aligned along a horizontal axis. The inductor assembly also includes a first arm and a second arm attached to the magnetic core. The inductor assembly also includes a gap between the first arm and the second arm. The first arm includes a first portion of the magnetic core material facing the gap and the second arm includes a second portion of the magnetic core material facing the gap opposite the first portion. The inductor assembly includes a first coil of the first arm and a second coil on the second arm. When current flows through the first coil and the second coil, a magnetic field is applied to a component to generate an eddy current to cause heat excitation by a defect within the component. The first portion is shaped to accommodate a first surface of the component. The second portion is shaped to accommodate a second surface of the component.

In an embodiment of the above, the first surface of the component includes a protrusion and the first portion of the magnetic core material is shaped to fit the protrusion such that the first surface is at a substantially uniform distance from the magnetic core material of the first arm.

In an embodiment of any of the above, the second surface of the component includes a protrusion and the second portion of the magnetic core material is shaped to fit the protrusion such that the second surface is at a substantially uniform distance from the magnetic core material of the second arm.

In an embodiment of any of the above, the first portion and the second portion are concave portions, and optionally the gap formed between the concaved shaped portions extends in a direction vertical to the horizontal axis of the magnetic core greater than a length of the component.

In an embodiment of any of the above, the first arm and the second arm are configured to generate the magnetic field at an angle offset to the horizontal axis of the magnetic core.

In an embodiment of any of the above, the first and second arms are positioned at the angle to offset the magnetic field applied to the component.

In an embodiment of any of the above, the first and second arms of the inductor assembly are not aligned in a horizontal direction such that the first and second coils are offset to apply the magnetic field at the angle.

In an embodiment of any of the above, the first and second coils are shaped to generate the magnetic field at the angle.

In an embodiment of any of the above, the first and second arms include magnetic core material shaped to apply the magnetic field to the component at the angle.

In an embodiment of any of the above, the eddy current flows within the component at an angle relative to the angle of the magnetic field such that the defect disturbs a direction of the eddy current to cause the heat excitation within the component.

According to another aspect, the present invention is directed to a C-shaped inductor assembly for use in an inspection system. The inductor assembly includes a magnetic core having magnetic core material. The magnetic core is aligned along a horizontal axis. The inductor assembly also includes a first arm and a second arm attached to the magnetic core. The inductor assembly also includes a gap between the first arm and the second arm. The inductor assembly also includes a first coil on the first arm and second coil on the second arm. When current flows through the first coil and the second coil, a magnetic field is applied to a component to generate an eddy current to cause heat excitation by a defect within the component. The first arm and the second arm are configured to generate the magnetic field at an angle offset to the horizontal axis of the magnetic core.

In an embodiment of the above, the first surface of the component includes a protrusion and the first portion of the magnetic core material is shaped to fit the protrusion such that the first surface is at a substantially uniform distance from the magnetic core material of the first arm.

In an embodiment of any of the above, the second surface of the component includes a protrusion and the second portion of the magnetic core material is shaped to fit the protrusion such that the second surface is at a substantially uniform distance from the magnetic core material of the second arm.

In an embodiment of any of the above, the first portion and the second portion are concave portions, and optionally the gap formed between the concaved shaped portions extends in a direction vertical to the horizontal axis of the magnetic core greater than a length of the component.

In an embodiment of any of the above, the first and second arms are positioned at the angle to offset the magnetic field applied to the component.

In an embodiment of any of the above, the first and second arms of the inductor assembly are not aligned in a horizontal direction such that the first and second coils are offset to apply the magnetic field at the angle.

In an embodiment of any of the above, the first and second coils are shaped to generate the magnetic field at the angle.

In an embodiment of any of the above, the first and second arms include magnetic core material shaped to apply the magnetic field to the component at the angle.

In an embodiment of any of the above, the eddy current flows within the component at an angle relative to the angle of the magnetic field such that the defect disturbs a direction of the eddy current to cause the heat excitation within the component.

According to another aspect, the present invention is directed to a method for detecting a defect in a component is disclosed. The method includes applying a magnetic field to the component within a gap between a first arm and a second arm coupled to the magnetic core of an inductor assembly using a first coil on the first arm and a second coil on the second arm. The first and second arms and the first and second coils are positioned to offset the magnetic field applied to the component at an angle from the horizontal axis of the magnetic core. The method also includes generating an eddy current in the component corresponding to the magnetic field applied by the inductor assembly. The method also includes detecting heat generated by the eddy current interacting with the defect in the component. The method also includes capturing the heat generated by the defect using an infrared camera. The method also includes generating an image scan form at least one thermal signature of the heat captured by the infrared camera.

The embodiments of the invention described above may be applied individually, or in any combination, to any of the above aspects of the invention.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
Figure 1A is a cross-sectional view of a gas-turbine engine according to the disclosed embodiments.
Figure 1B is a cross-sectional view of a high pressure compressor according to the disclosed embodiments.
Figure 2 is a front view of an integrally bladed rotor according to the disclosed embodiments.
Figure 3 is a front view of a damaged portion of integrally bladed rotor according to the disclosed embodiments.
Figure 4A is a block diagram of an inspection system according to the disclosed embodiments.
Figure 4B is a perspective view of an inductor assembly of the inspection system used in conjunction with the integrally bladed rotor according to the disclosed embodiments.
Figure 5 is a block diagram showing a plurality of frames captured within an image scan according to the disclosed embodiments.
Figure 6 is a perspective view of an inductor assembly for use within inspection system according to the disclosed embodiments.
Figure 7 is an example of a defect within a 45 degree rotation of the magnetic field to induce a temperature change within the component according to the disclosed embodiments.
Figure 8 is a front view of the inductor assembly having a modified orientation of its arms according to the disclosed embodiments.
Figure 9 is a front view of the inductor assembly having modified coils according to the disclosed embodiments.
Figure 10 is a front view of the inductor assembly having a modified magnetic core to accommodate a complex component according to the disclosed embodiments.
Figure 11 is a front view of the inductor assembly having concave portions of the magnetic core according to the disclosed embodiments.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to a non-contact, infrared (IR) image nondestructive testing (NDT) method using eddy current thermography for surface and subsurface crack detection in a component. The disclosed embodiments use eddy current thermography to detect cracks under a few mils or millimeters of coating. Inductor coils provide the changing magnetic flux to induce an eddy current on the test part surface and subsurface. The presence of the crack will disturb the current flow to cause a temperature change in the area of the crack.

A crack oriented perpendicular to the magnetic field generated by the detection system may be more difficult to detect because its disturbance to the eddy current is reduced compared to other crack orientations, such as a crack in the same orientation of the magnetic field lines. The disclosed embodiments may rotate the magnetic field in a second direction, such as a counterclockwise 45 degree offset. After the rotation, the crack may no longer be perpendicular to the magnetic field and easier to detect.

Depending on the crack orientation on the component, the disclosed embodiments may optimize rotating the magnetic field direction between 0 degrees and 45 degrees, such as 15 degrees, 30 degrees, and the like. This feature enables the detection system to detect randomly oriented cracks by scanning with two sets of magnetic field directions. The rotated field directions may be accomplished by several processes. For example, one process may be rotating the orientation of the C-shaped inductor assembly relative to the component. Another process may be offsetting the arms of the C-shaped inductor assembly to not be parallel to one another or so that the arms are not directly colinear. Another process may be changing the shape or size of the coils wrapped around the arms of the C-shaped inductor assembly.

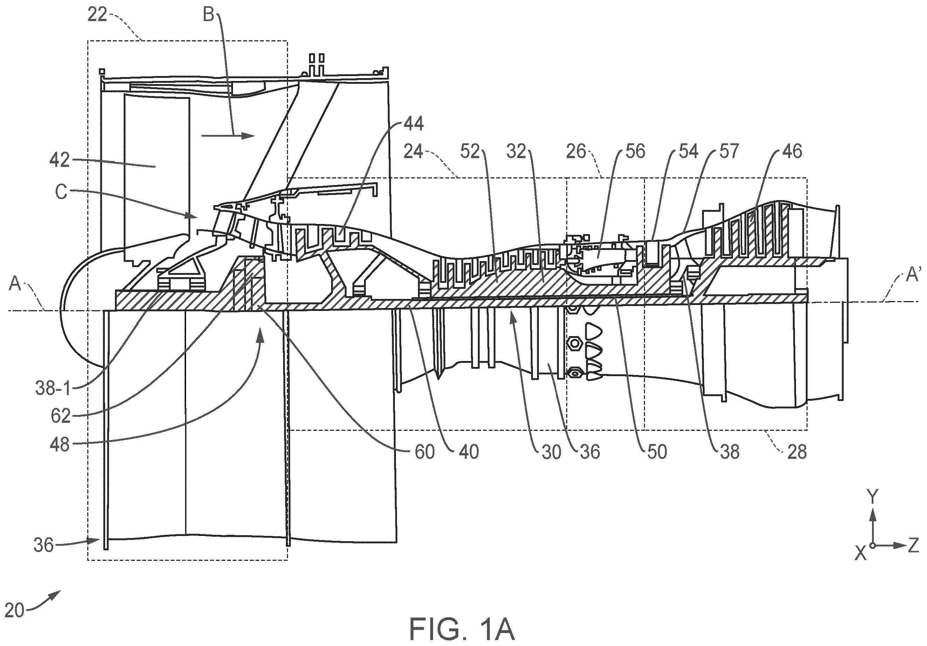

Figure 1A depicts a cross-sectional view of a gas-turbine engine 20 according to the disclosed embodiments. Gas-turbine engine 20 may be a two-spool turbofan that incorporates a fan section 22, a compressor section 24, a combustor section 26, and a turbine section 28. During operation, fan section 22 may drive air along a path of bypass airflow B while compressor section 24 can drive air along a core flow path C for compression and communication into combustor section 26 then expansion through turbine section 28. Although depicted as a turbofan gas engine 20 herein, it may be understood that the concepts disclosed herein are not limited to use with turbofans as the teachings may be applied to other types of turbine engines including three-spool architectures, single spool architecture, and the like.

Gas turbine engine 20 may include a low speed spool 30 and a high-speed spool 32 mounted for rotation about an engine central longitudinal axis A-A' relative to engine static structure 36 or engine case via several bearing systems 38, 38-1, and so on. Engine central longitudinal axis A-A' is oriented in the Z direction on the provides X-Y-X axes. It may be understood that various bearing systems 38 at various locations may alternatively or additionally be provided, including, for example, bearing system 38, bearing system 38-1, and so on.

Low speed spool 30 may include an inner shaft 40 that interconnects a fan 42, a low pressure compressor 44, and a low pressure turbine 46. Inner shaft 40 may be connected to fan 42 through a geared architecture 48 that can drive fan 42 at a lower speed than low speed spool 30. Geared architecture 48 may include a gear assembly 60 enclosed within a gear housing 62. Gear assembly 60 couples inner shaft 40 to a rotating fan structure. High speed spool 32 may include an outer shaft 50 that interconnects a high pressure compressor 52 and high pressure turbine 54.

A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. In some embodiments, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46 and 54 rotationally drive the respective low speed spool 30 and high speed spool 32 in response to the expansion.

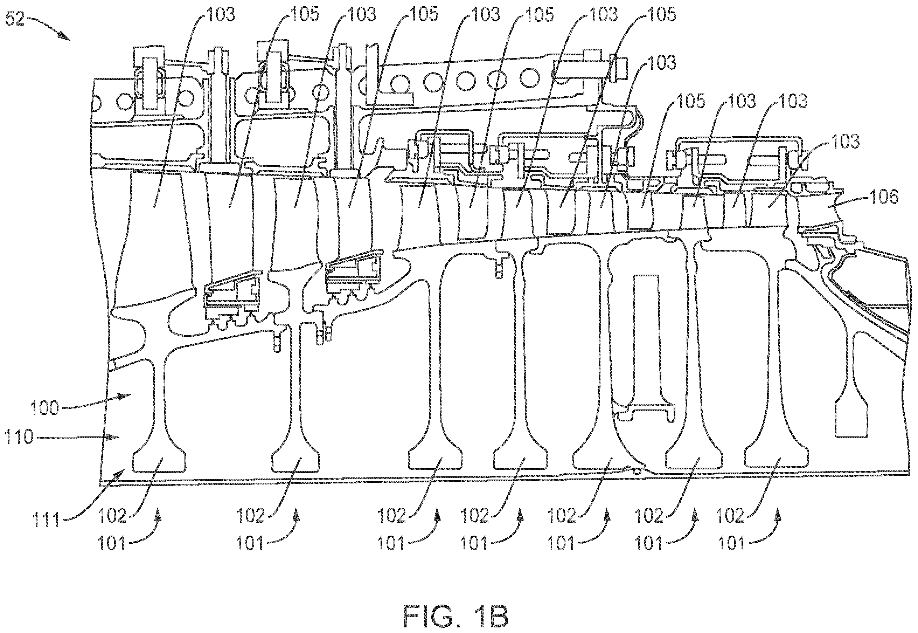

Figure 1B depicts a cross-sectional view of a high pressure compressor 52 according to the disclosed embodiments. High pressure compressor 52 of compressor section 24 of gas turbine engine 20 is provided. High pressure compressor 52 includes a plurality of blade stages 101, or rotor stages, and a plurality of vane stages 105, or stator stages. Blade stages 101 may each include an integrally bladed rotor (IBR) 100, such that blades 103 and rotor disks 102 are formed from a single integral component, or a monolithic component formed of a single piece. In some embodiments, the inspection, analysis, and repair systems disclosed herein may be utilized with bladed rotors formed of separate blades 103 and rotor disks 102.

Blades 103 extend radially outward from rotor disk 102. Gas turbine engine 20 may further include an exit guide vane stage 106 that defines the aft end of high pressure compressor 52. In some embodiments, low pressure compressor 44 may include a plurality of blade stages 101 and vane stages 105, each blade stage in the plurality of blade stages 101 including IBR 100. In other embodiments, the plurality of blade stages 101 form a stack of IBRs 110, which define, at least partially, a rotor module 111 of high pressure compressor 52 of gas turbine engine 20.

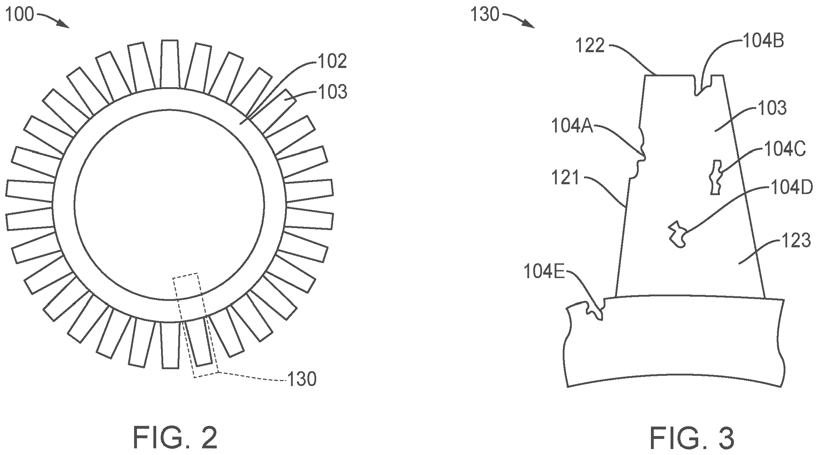

Figure 2 depicts a front view of an IBR 100 according to the disclosed embodiments. IBR 100 includes a rotor disk 102 and a plurality of blades 103 extending radially outward from rotor disk 102.

When debris is ingested into gas turbine engine 20, the debris may pass into the primary flowpath. Due to the rotation of blades 103 in the primary flowpath, the debris may contact one or more blades 103. This contact may cause damage or wear to a blade 103, or a set of blades 103. Thus, systems and methods are used for inspection, analysis, and repair of an IBR 100 to return the IBR back to service after inspection or repair. Portion 130 is shown for one of blades 103, and disclosed in greater detail by Figure 3.

Figure 3 depicts a damaged portion 130 of IBR 100 according to the disclosed embodiments. Damaged portion 130 includes a number of defects 140A-E resulting from use of IBR 100 in gas turbine engine 20 over time. Defects may be caused by damage, wear, debris, and the like. The size and shape of defects 140A-E may be exaggerated for illustrative purposes within Figure 3. In some embodiments, defects 140A-E may extend to all of blades 103 of IBR 100, rotor disk 102, a set of blades 103 of IBR 100, a single blade in blades 103, none of blades 103, and the like.

In order to repair one or all of defects 140A_E, they need to be identified and resolved such that IBR 100 can be re-introduced into service for further use. As many defects may occur after the use of gas turbine engine 20, an automated workflow process is used to identify possible defects, or indications, using inspection systems. One such system may be a thermography inspection system using eddy current generated by an inductor assembly.

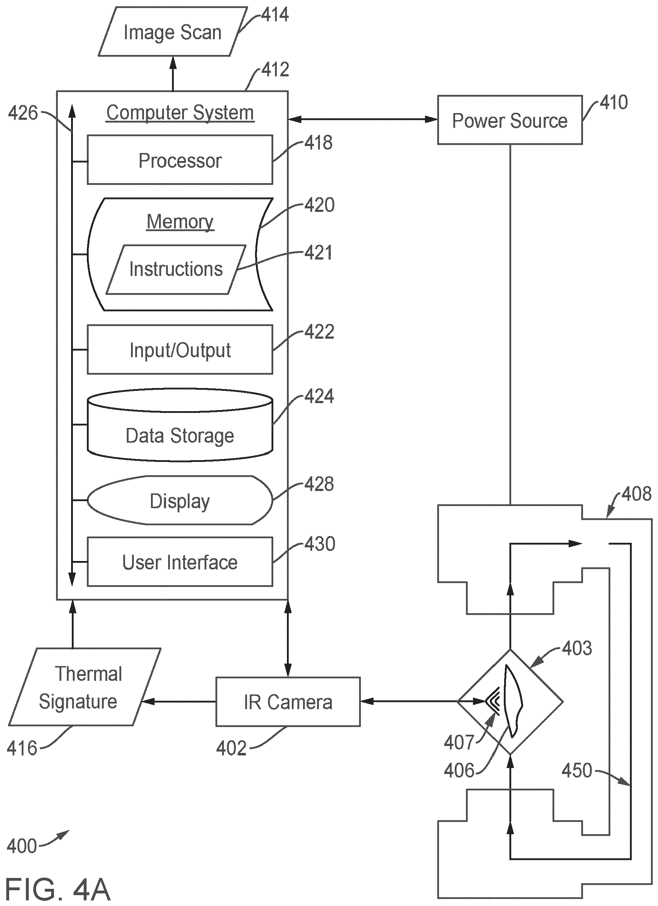

Figure 4A depicts a block diagram of an inspection system 400 according to the disclosed embodiments. Crack detection by inspection system 400 detects internal and external damage in components, such as blade 103. Component 403 may be part of blade 103, or blade 103 itself. Inspection system 400 collects a set of time-series temperature data at each pixel of the component image using a video recording IR camera 402. If there is an indication, or discontinuity, in component 403, then heat 407 is released around a defect 406 due to the changing magnetic flux. Defect 406, for example, may be a crack. The thermal variations over time are then captured by IR camera 402 to display certain patterns in the time-series temperature data in the indication area.

IR camera 402 may include one or more sensors operable to obtain thermal radiation over a wide spectral range such as from 0.5 to 22 µm in wavelength. In some embodiments, IR camera 402 may include one or more of a short-wave infrared module, a mid-wave infrared module, a long-wave infrared module, a very long-wave infrared module, and a broadband infrared module. The modules may use beam splitters to view a component such as blade 103 through one or more lenses at multiple wavelengths simultaneously. IR camera 402 may cycle through different positions to capture the IR radiation. For example, inspection system 400 may cycle IR camera through 64 positions to acquire the IR video frames. IR camera 402 may capture the thermal radiation during the mechanical excitation, or heat up, phase and a cool down phase.

Inspection system 400 also includes inductor assembly 408. Inductor assembly 408 may be a C-shaped inductor assembly that produces inductively excited thermography. Using inductively excited thermography, near-surface defects in the form of cracks, distortions, or similar structural defects may be detected in component 403. Inductor assembly 408 may use brief pulsed eddy currents to heat component 403. For example, a high-frequency eddy current may be impressed into a near-surface region of component 403 with the aid of an induction coil arrangement.

Cracks and defects, if present, will disturb current flow 450 within inductor assembly 408. The eddy current forming within a region of component 403 is hindered from its free propagation on cracks or defects so that induced eddy current flow is detoured thereby resulting in a locally changed current density. With the changing current density, Joule losses may be associated with local warming, which leads to changes in the surface temperature distribution. These changes may be expressly manifested in the vicinity of cracks and defects, such as defect 406. The disclosed embodiments detect the locally forming temperature gradients, or heat 407, with IR camera 402.

Inspection system 400 also includes computer system 412. Computer system 412 may be a digital computer system configured for data acquisition and robotic controls. Computer system 412 also may serve to acquire data captured by IR camera 402 as well as control power source 410. Computer system 412 also may generate image scan 414 based on the data, or thermal signature 416, captured by IR camera 402. Image scan 414 may include a plurality of frames having pixels showing the heat detected by IR camera 402 while component 403 is subjected to current flow 450. For example, image scan 414 may include the specific raw frame images of each geometry of component 403. The output of computer system 412 may be a set of geometric transformations that align images with computer-aided design models of component 403.

Computer system 412 may include at least one processor 418, a memory 420 having instructions 421, and an input/output (I/O) subsystem 422. These components of computer system 412 may be connected to each other with data bus 426. Processor 418 may execute instructions 421 stored in memory 420 to configure computer system 412 to perform the functions and operations disclosed herein, including the operation of power source 410 and IR camera 402. Further, instructions 421 may configure computer system 412 to analyze thermal signature 416 and further process image scan 414 to detect and predict defects within the scan of component 403.

I/O subsystem 412 may include an I/O controller, a memory controller, and one or more I/O ports. Processor 418 and I/O subsystem 422 are communicatively coupled to memory 420 via data bus 426. Memory 420 may be embodied as any type of computer memory device, such as a volatile memory such as a random access memory. Memory 420 also may be a non-volatile memory storing instructions 421. I/O subsystem 422 also may be communicatively coupled via data bus 426 to a number of hardware, firmware, or software components, including a data storage device 424, a display device 428, and a user interface (UI) subsystem 430.

Data storage device 424 may include one or more hard drives or other suitable persistent storage devices, such as flash memory, memory cards, memory sticks, and the like. A database for models, or image scans 414, of component 403 may reside at least temporarily in data storage device 424. Processing according to the disclosed embodiments of image scan 414 also may occur with computing system 412. The operations to execute these processes is disclosed in greater detail below. Alternatively, computing system 412 may provide image scan 414 to other devices that are configured to analyze the images of component 403.

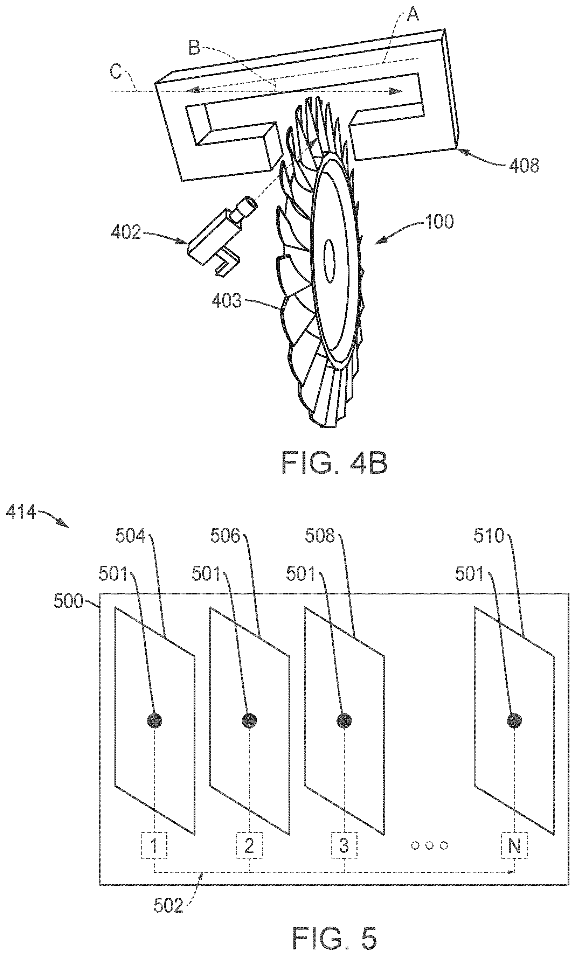

Figure 4B depicts a perspective view of inductor assembly 408 of inspection system 400 used in conjunction with IBR 100 according to the disclosed embodiments. Figure 4B shows an example of how inductor assembly 408 may be used to detect a defect 406 within a blade 103, which may be analogous to component 403 disclosed above. An existing eddy current inspection system may be used to scan the inner hub, or rotor disk 102, of IBR 100. This process may be performed to the base of the plurality of blades 103. Inspection system 400 may use inductor assembly 408 to scan the plurality of blades 103.

Inductor assembly 408 is positioned to excite each of the plurality of blades 103 using a magnetic field applied to each blade, similar to component 403 shown in Figure 4A. As may be appreciated, arms of inductor assembly 408, disclosed in greater detail below, are aligned with blade 103. Infrared camera 402 monitors blade 103 and captures the area temperature, or heat 407, caused by defects, such as cracks and the like. IBR 100 will rotate in relation to inductor assembly 408 for each blade 103 for inspection. Infrared camera 402 may move to the opposite side of IBR 100 to inspect the other side of blade 103 to capture heat 407, if applicable.

In some embodiments, the position of inductor assembly 408 may be rotated in relation to the plurality of blades 103. For example, instead of being aligned horizontally with blade 103 such that a horizontal axis A of an aligned position of inductor assembly 408 is the same as an axis C aligned with the position of the blade, the horizontal axis of inductor assembly 408 may be offset at an angle B in relation to a position of blade 103.

Inductor assembly 408 may be rotated to various angles B to apply a magnetic field to blade 103 in different positions. For example, angle B may be rotated to 15 degrees so that inductor assembly is tilted to have horizontal axis A of its magnetic core to intersect axis C aligned with a position of the blade with regard to IBR 100 at the angle. Camera 402 may capture heat 407 from any defects 406 when the magnetic field is applied. This process may be repeated for angles B of 30 degrees and 45 degrees. The application of the magnetic fields at these angles results in the eddy current generated in the component also flowing at an angle within the component. These features are disclosed in greater detail below.

Figure 5 depicts a block diagram showing a plurality of frames 500 captured within image scan 414 according to the disclosed embodiments. Frames 500 may correspond to the thermal signatures 416 captured by IR camera 402 over a time period 502. As disclosed above, heat 407 is captured by IR camera 402 for radiation emitting from component 403 over time. Frames also may be referred to as images or image frames.

Plurality of frames 500 includes frame 504, frame 506, frame 508 up to frame 510. Frame 510 may be the final frame in the plurality of frames 500. Frame 504 may be captured at time instance 1. Frame 506 may be captured at time instance 3. Frame 508 may be captured at time instance 3. Additional frames may be caught during additional time instances up to frame 510, which is captured at time N.

Frames 504, 506, 508, up to frame 510 includes pixels within the images of the frames. The pixels may include temperature data as captured by IR camera 402. For example, the pixels may include colors that correspond to a temperature value detected by IR camera 402 for a location on component 403. Thus, for each frame and time unit, temperature data is captured for each pixel within the images of the frames. For example, pixel 501 is within plurality of frames 500 at a location (x,y) along an x axis and a y axis within a frame. Pixel 501 may exhibit a color for a temperature detected from the heat radiation off the corresponding location on component 403.

Using the example, pixel 501 in frame 504 at time instance 1 may have a temperature value TM1. Pixel 501 in frame 206 at times instance 2 may have a temperature value TM2, which may differ from temperature value TM1. Pixel 501 in frame 508 may have a temperature value TM3. The temperature values within the subsequent frames may vary up to temperature value TMN for pixel 501 in frame 510. As may be appreciated, all the pixels within plurality of frames 500 may have different temperature values for time period 502. The temperature data may be collected for each pixel. Using these different temperature values, defect 406 may be identified based on image scan 414.

Thus, generation of heat 407 at a possible defect is desirable to properly capture the temperature values in image scan 414. Inductor device 408 may use eddy current thermography techniques to generate heat 407, as disclosed above. The process of eddy current induction and heat diffusion are integrated with the IR radiation range of IR camera 402. Using these processes, inspection system 400 may detect hidden, subsurface defects 406 even in complex geometry components. Further, by implementing eddy current thermography, inspection system 400 may provide increased flaw detection sensitivity in a brief inspection time.

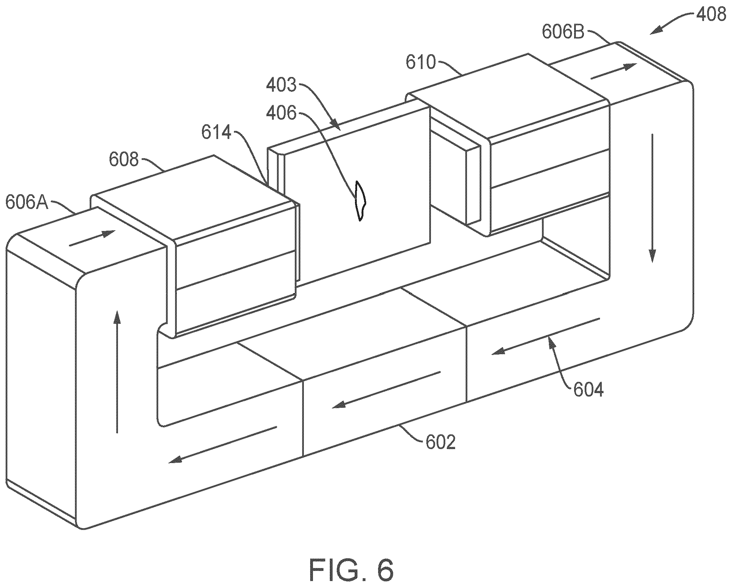

Figure 6 is a perspective view of an inductor assembly 408 for use within inspection system 400 according to the disclosed embodiments. Inductor assembly 408 is a C-shaped inductor that includes a magnetic core 602 with a gap 614 to insert component 403. Inductor assembly 408 also includes two arms 606A and 606B having two identical coils 608 and 610 to provide a changing magnetic flux 604 in gap 614 to induce eddy current on component 403. Coil 608 may be placed on arm 606A and coil 610 may be placed on arm 606B.

Eddy current excitation is originated by an alternating current, such as provided by power source 410. When coils 608 and 610 are excited, the time varying magnetic field is induced that produces induced eddy current in component 403. For example, a high frequency electromagnetic wave, such as 50-500 kHz, may be applied to component 403. The disclosed embodiments may implement pulses that is switched on for a short period, such as 20ms to 2 seconds. The induced eddy currents in component 403 are converted to heat through ohmic heating. Direct heating and diffused heating contribute to defect detection. Cracks, voids, and the like, shown as defect 406, disturb the current flow to change the temperature distribution. Using these techniques, defect detection is performed with little chance of damage to component 403.

In some embodiments, it may be desirable to have component 403, and defect 406, as close to coils 608 and 610 as possible. As disclosed above, the presence of defect 406 results in a temperature change that is detectable by IR camera 402. Defects that are easiest to detect are in the same orientation as the magnetic field direction on component 403. The eddy current runs perpendicular to the magnetic field direction. This configuration results in detectable temperature change. In contrast, a defect oriented parallel to the direction of the magnetic field has a reduced eddy current density as it is positioned in the direction of the eddy current flow.

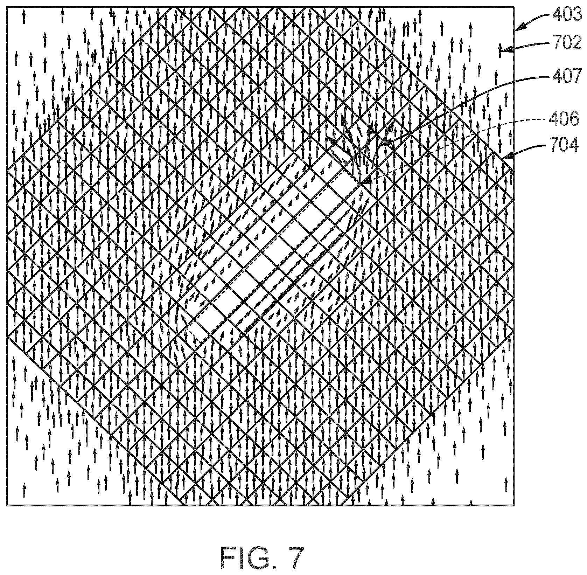

As may be appreciated, the orientation of cracks, voids, and the like are not known before using inspection system 400. Thus, the disclosed embodiments apply the magnetic field direction in various angles to component 403 to induce some disturbance in the eddy current flow no matter how the defect is oriented. For example, referring to Figure 7, defect 406 is shown with a 45 degree rotation of the magnetic field to induce a temperature change within component 403 according to the disclosed embodiments.

Component 403 disclosed herein may be blades 103 to inspect cracks under the platform, crack on the airfoil, cracks after welding repair around a welding area, and the like. Component 403 also may be a case with attachments like bolts, clips, and the like. Component 403 also maybe a blade outer air seal (BOAS) or another component having a complex shape.

Referring back to Figure 4B, the position of arms 606A and 606B of inductor assembly 408 may be rotated to have the magnetic field applied at an angle offset from a horizontal axis of magnetic core 602. The positions of inductor assembly 408 in relation to IBR 100 may be changed to different points to capture heat 407 by infrared camera 402 at each position. Doing so will result in eddy current that flows at an angle to any defect 406 in component 403.

As shown in Figure 7, defect 406 is at an angle to eddy current 702 within component 403. Eddy current 702 flows in a direction that interacts with defect 406. Magnetic field lines 704 also are shown. Magnetic field lines 704 are positioned at an angle to the direction of eddy current 702 as well. This position may be achieved by rotating inductor assembly 408 in relation to component 403. Alternatively, component 403 may be rotated in relation to inductor assembly 408. These configurations are opposed to those having the magnetic field on the center of the core, or horizontal, so that a defect oriented perpendicular to the field is more difficult to detect.

Instead, the disclosed embodiments rotate the magnetic field to a second direction, as shown by magnetic field lines 704, such that the 45 degree offset means that defect 406 is no longer perpendicular to the magnetic field. Heat 407 will be generated by the disturbance in the flow of eddy current 702. In some embodiments, inductor assembly 408 may be rotated at different angles between 0 and 45 degrees, such as 15 and 30 degrees. IR camera 402 may capture thermal signatures 416 for each angle to generate separate image scans 414. The different image scans may be used to detect defect 406. This feature enables inspection system 400 to detect randomly oriented cracks, voids, and the like by scanning two or more sets of magnetic field directions.

To capture thermal signatures 416, inductor assembly 408 may be rotated to the different angle offsets. Such an arrangement, however, may result in component 403 having increased distance from coils 608 and 610. As disclosed above, it may be desirable to having component 403 as close to coils 608 and 610 as possible to generate an amount of eddy current 702 that interacts with defect 406. A weak magnetic field may not result in an adequate amount of eddy current 702 to generate heat 407 for detection within inspection system 400. Thus, in additional embodiments, modifications may be made to inductor assembly 408 to offset the magnetic field from the orientation of defect 406.

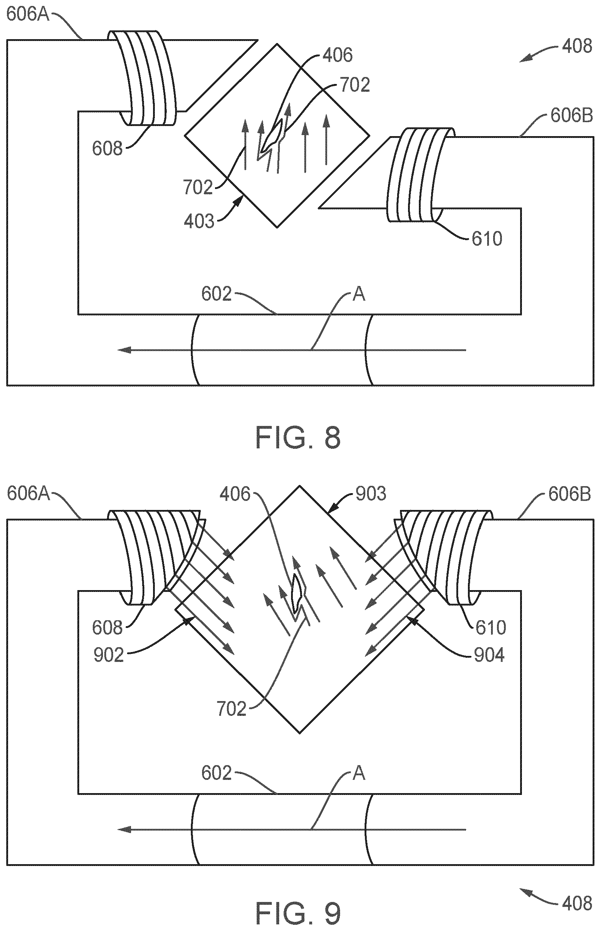

Figure 8 depicts a front view of inductor assembly 408 having a modified orientation of arms 606A and 606B according to the disclosed embodiments. As shown, arms 606A and 606B are offset from each other in a vertical direction with reference to an axis A for magnetic core 602. Arm 606A includes coil 608 and arm 606B includes coil 610. Component 403 is positioned offset from magnetic core 602 such that defect 406 is at an angle to the magnetic field generated by inductor assembly 408. Eddy current 702 interacts with defect 406 in a manner to generate heat 407 due to disturbances in the flow of the eddy current. The offset configuration of arms 606A and 606B also allow magnetic core material to be as close to component 403 as possible.

In some embodiments, arms 606A and 606B may be offset in a horizontal direction so that the magnetic field still produces an eddy current 702 that is at an angle to defect 406. In some embodiments, component 403 may be positioned horizontally to accommodate this shape of inductor assembly 408. Using these embodiments, the magnetic field is rotated in a direction offset from the horizontal direction of the magnetic field. Defect 406 is not perpendicular to the magnetic field or eddy current 702 for a greater possibility of heat generation during the eddy current thermography process.

Figure 9 depicts a front view of inductor assembly 408 having modified coils 608 and 610 according to the disclosed embodiments. In this embodiment, the shape of coil 608 on arm 606A and coil 610 on arm 606B is changed to induce magnetic fields 902 and 904, respectively, at an orientation offset at an angle from the horizontal axis A of magnetic core 602. Arms 606A and 606B may be aligned with each other. Coils 608 and 610, however, are shaped, such as being cut, to emit the magnetic field in a direction other than horizontal to magnetic core 602.

In further embodiments, the magnetic core material of magnetic core 602 in arm 606A and arm 606B are shaped to accommodate the shape of coils 608 and 610, respectively. The magnetic core materials also may be shaped at an angle from horizontal axis A of magnetic core 602. This configuration may be helpful for uniquely shaped components, such as component 903. The surfaces of the magnetic core material are relative uniform to the surfaces of component 903. Thus, magnetic fields 902 and 904 may be applied directly to component 903.

As a result of magnetic fields 902 and 904 not being horizontal, eddy current 702 also may be not be vertical within component 903. A crack, void, and the like, shown as defect 406, will not be oriented in relation to the magnetic fields so that a lack of disturbance of eddy current 702 does not result in heat 407 from the defect. Instead, defect 406 interferes with the flow of eddy current 702 in component 903 to generate heat 407. In other embodiments, coils 608 and 610 may be cut at different shapes to emit magnetic fields 902 and 904 in specified directions for different components.

In some embodiments, the direction of the magnetic field is changed relative to a position of component 403 or 903 in order to generate an eddy current 702 that is interfered by any defect within the component. This feature may be provided by rotating the orientation of inductor assembly 408, the orientation of arms 606A and 606B, or the shape of coils 608 and 610. Thus, in these embodiments, inductor assembly 408 is configured to position arms 606A and 606B or to shape coils 608 and 610 to generate a magnetic field that offset at an angle to an alignment of component 403 or 903. In other words, any potential defect 406 is at an angle to the magnetic field and eddy current generated by inductor assembly 408. These features result in increased heat 407 being generated for capture by IR camera 402.

In alternate embodiments, inductor assembly 408 may be shaped to fit a complex shape of a component under inspection. The strength of the magnetic field decreases as the distance from coils 608 and 610 increases. For example, the magnetic field may be subject to the inverse square law or inverse cube law in that the strength of the magnetic field generated by inductor assembly 408 is proportional to the square of the distance from the source of the field, or coils 608 and 610.

For complex shapes, component 403 or 903 may not be in a shape of a blade 103. For example, a BOAS component may not have a geometric shape conducive for rotating inductor assembly 408, offsetting arms 606A and 606B, or shaping coils 608 and 610. The complex component will result in an increased distance from coils 608 and 610. Inductor assembly 408, instead, may modify magnetic core 602 to a step shape or other shape to accommodate the outline of the complex component.

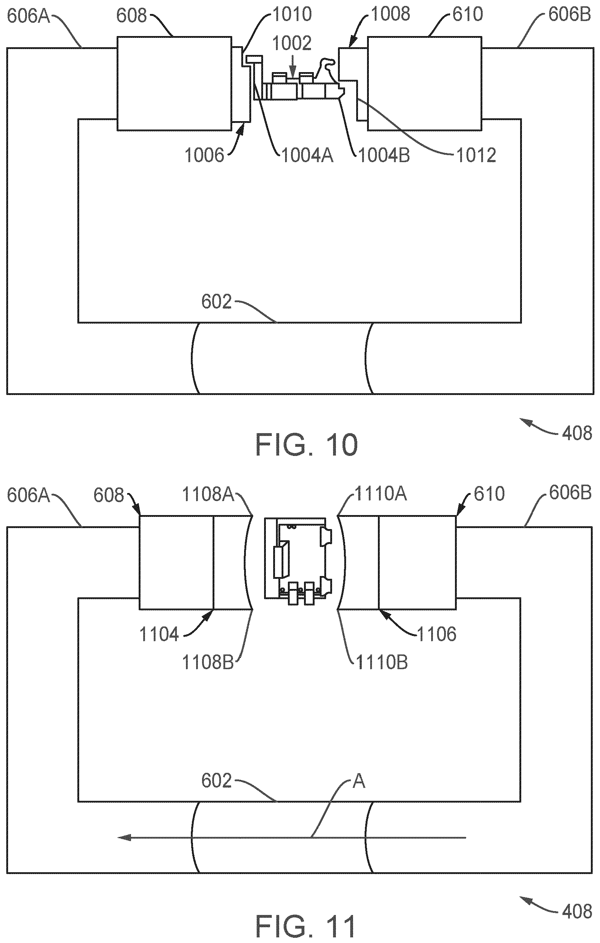

Figure 10 depicts a front view of an inductor assembly 408 having a modified magnetic core 602 to accommodate complex component 1002 according to the disclosed embodiments. As may be appreciated, complex component 1002 includes protrusions 1004A and 1004B that may not allow the complex component 1002 to align as close as possible to magnetic core 602 of arms 606A and 606B. Thus, complex component 1002 may be separated at an increased distance from coils 608 and 610, which generate the magnetic field to produce eddy current 702 in the complex component.

According to some embodiments, inductor assembly 408 includes stepped cut portions 1006 and 1008 to accommodate the outline of complex component 1002 so the face of the magnetic core distance from the outline of the complex component 1002 is more uniform. For example, the distance between the surfaces of complex component 1002 may be 2.5 mm aligned with magnetic core 602 of arms 606A and 606B.

Stepped cut portion 1006 includes a cut portion 1010 to accommodate protrusion 1004A of complex component 1002. The surface of protrusion 1004A facing arm 606A is at the desired distance, such as 2.5 mm, as the other surfaces of complex component 1002 facing magnetic core 602 of arm 606A. Stepped cut portion 1006 may include additional cut portions to accommodate other protrusions of complex component 1002 facing magnetic core 602 of arm 606A.

Stepped cut portion 1008 includes a cut portion 1012 to accommodate protrusion 1004B of complex component 1002. The surface of protrusion 1004B facing arm 606B is at the desired distance, such as 2.5 mm, as the other surfaces of complex component 1002 facing magnetic core 602 of arm 606B. Stepped cut portion 1008 may include additional cut portions to accommodate other protrusions of complex component 1002 facing magnetic core 602 of arm 606B. Thus, using stepped cut portions 1006 and 1008, inductor assembly 408 may generate a magnetic field in complex component 1002 having a relatively uniform strength as the distance also is relatively uniform between magnetic core 602 and the surfaces of the complex component.

Figure 11 depicts a front view of inductor assembly 408 having concave portions 1104 and 1106 of magnetic core 602 according to the disclosed embodiments. In some embodiments, the component being inspected may be larger than magnetic core 602 in arms 606A and 606B. Portions of the component may not be in the direct magnetic field path. This condition may result in low current density. The disclosed embodiments may increase the size of the core material to cover the whole length of the component.

In these embodiments, arm 606A includes concave portion 1104 and arm 606B includes concave portion 1106. The concave portions are large enough to fit complex component 1102 within the concaved area formed in magnetic core 602. Coil 608 is wrapped around arm 606A and coil 610 is wrapped around arm 606B. Concave portions 1104 and 1106 allow complex component 1102 to be inserted in gap 614 of inductor assembly 408 at distances close enough to magnetic core 602 to generate the magnetic field in the complex component. Further, concave portions 1104 and 1106 may accommodate protrusions or other parts extending from complex component 1102.

Concave portion 1104 portion may extend in a direction vertical to horizontal axis A of magnetic core 602 between ends 1108A and 1108B longer than a length of complex component 1102. Concave portion 1106 also may extend in a direction vertical to horizontal axis A between ends 1110A and 1110B longer than the length of the complex component. In this manner, the entire length of complex component 1102 is subjected to the magnetic field generated by inductor assembly 408. Further, concave portions 1104 and 1106 may allow complex components of various shapes to be subject to inductor assembly 408. Concave portions 1104 and 1106 are not specially shaped for specific complex component configurations.

In some additional embodiments, the size of concave portions 1104 and 1106 may be adjustable. Arms 606A and 606B may be removable to implement different sizes of concave portions applicable to different sized components. Magnetic core 602 may be modified to allow attachment of different arms thereto. The detachable arms include coils 608 and 610 of different sizes as well. Thus, a variety of complex components may be accommodated by inductor assembly 408.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. An inspection system (400) for detecting a defect (406) in a component (403), the inspection system comprising:
an infrared camera (402) configured to detect heat (407) generated using an eddy current in the component;
a computer system (412) configured to generate an image scan (414) from at least one thermal signature (416) of the heat (407) captured by the infrared camera (402); and
an inductor assembly (408) to apply a magnetic field to the component (403) to generate the eddy current, wherein the inductor assembly includes:
a C-shaped magnetic core (602) having a first arm (606A) and a second arm (606B);
a first coil (608) on the first arm (606A) and a second coil (610) on the second arm (606B) to generate the magnetic field; and
a gap (614) to accommodate the component between the first arm (606A) and the second arm (606B), wherein the first and second arms (606A, 606B) and the first and second coils (608, 610) are positioned to offset the magnetic field within the component at an angle from a horizontal axis of the magnetic core (602).

2. The inspection system (400) of claim 1, wherein first and second arms (606A, 606B) of the inductor assembly (408) are positioned at the angle to offset the magnetic field applied by the inspection system (400).

3. The inspection system (400) of claim 1 or 2, wherein the first and second arms (606A, 606B) of the inductor assembly (408) are not aligned in a horizontal direction such that the first and second coils (608, 610) are offset to apply the magnetic field at the angle.

4. The inspection system (400) of any preceding claim, wherein the first and second coils (608, 610) are shaped to generate the magnetic field at the angle.

5. The inspection system (400) of any preceding claim, wherein the first and second arms (606A, 606B) include magnetic core material shaped to apply the magnetic field to the component at the angle.

6. The inspection system (400) of any preceding claim, wherein the first and second arms (606A, 606B) include magnetic core material having a first stepped cut portion (1006) and a second stepped cut portion (1008), respectively.

7. The inspection system (400) of claim 6, wherein the first stepped cut portion (1006) is shaped to fit at least one first protrusion (1004A) of the component and the second stepped cut portion (1008) is shaped to fit at least one second protrusion (1004B) of the component.

8. The inspection system (400) of any preceding claim, wherein the first and second arms (606A, 606B) include magnetic core material having a first concave portion (1104) and a second concave portion (1106), respectively.

9. The inspection system (400) of claim 8, wherein the component fits within the gap (614) formed by the first concave portion (1104) and the second concave portion (1106).

10. A C-shaped inductor assembly (408) for use in an inspection system (400), the inductor assembly (408) comprising:
a magnetic core (602) having magnetic core material, wherein the magnetic core (602) is aligned along a horizontal axis;
a first arm (606A) and a second arm (606B) attached to the magnetic core (602);
a gap (614) between the first arm (606A) and the second arm (606B), wherein the first arm (606A) includes a first portion of the magnetic core material facing the gap (614) and the second arm (606B) includes a second portion of the magnetic core material facing the gap (614) opposite the first portion; and
a first coil (608) on the first arm (606A) and a second coil (610) on the second arm (606B), wherein when current flows through the first coil (608) and the second coil (610), a magnetic field is applied to a component (403) to generate an eddy current to cause heat (407) excitation by a defect (406) within the component, the first portion is shaped to accommodate a first surface of the component, and the second portion is shaped to accommodate a second surface of the component.

11. The C-shaped inductor assembly (408) of claim 10, wherein:
the first portion of the magnetic core material is shaped to fit a protrusion (1004A) of the first surface of the component such that the first surface is at a substantially uniform distance from the magnetic core material of the first arm (606A); and/or
the second portion of the magnetic core material is shaped to fit a protrusion (1004B) of the second surface of the component such that the second surface is at a substantially uniform distance from the magnetic core material of the second arm (606B).

12. The C-shaped inductor assembly (408) of claim 10 or 11, wherein the first portion and second portion are concaved shaped portions, and optionally the gap (614) formed between the concaved shaped portions extends a direction vertical to the horizontal axis of the magnetic core greater than a length of the component.

13. The C-shaped inductor assembly (408) of any of claims 10 to 12, wherein the first arm (606A) and the second arm (606B) are configured to generate the magnetic field at an angle offset to the horizontal axis of the magnetic core, and optionally wherein:
the first and second arms (606A, 606B) are positioned at the angle to offset the magnetic field applied to the component;
the first and second arms (606A, 606B) of the inductor assembly (408) are not aligned in a horizontal direction such that the first and second coils (608, 610) are offset to apply the magnetic field at the angle; and/or
the first and second arms (606A, 606B) include the magnetic core material shaped to apply the magnetic field to the component at the angle.

14. A C-shaped inductor assembly (408) for use in an inspection system (400), the inductor assembly (408) comprising:
a magnetic core (602) having magnetic core material, wherein the magnetic core (602) is aligned along a horizontal axis;
a first arm (606A) and a second arm (606B) attached to the magnetic core (602);
a gap (614) between the first arm (606A) and the second arm (606B);
a first coil (608) on the first arm (606A) and a second coil (610) on the second arm (606B), wherein when current flows through the first coil (608) and the second coil (610), a magnetic field is applied to a component (403) to generate an eddy current to cause heat (407) excitation by a defect (406) within the component,
wherein the first arm (606A) and the second arm (606B) are configured to generate the magnetic field at an angle offset to the horizontal axis of the magnetic core (602).

15. A method for detecting a defect (406) in a component (403), the method comprising:
applying a magnetic field to the component within a gap (614) between a first arm (606A) and a second arm (606B) coupled to a magnetic core (602) of an inductor assembly (408) using a first coil (608) on the first arm (606A) and a second coil (610) on the second arm (606B) of the inductor assembly (408), wherein the first and second arms (606A, 606B) and the first and second coils (608, 610) are positioned to offset the magnetic field applied to the component at an angle from a horizontal axis of the magnetic core;
generating an eddy current in the component corresponding to the magnetic field applied by the inductor assembly (408);
detecting heat (407) generated by the eddy current interacting with the defect (406) in the component (403);
capturing the heat (407) generated by the defect (406) using an infrared camera (402); and
generating an image scan (414) from at least one thermal signature (416) of the heat (407) captured by the infrared camera (402).
